# EUROPÄISCHE PATENTSCHRIFT

(11) **EP 1 104 611 B1**
(45) Veröffentlichungstag und Bekanntmachung des Hinweises auf die Patenterteilung: **17.09.2003**
(21) Anmeldenummer: 99944244.5
(22) Anmeldetag: 01.07.1999
(51) Int. Cl.: H04L 12/56

(54) **KOPPELFELD EINES KOMMUNIKATIONSNETZES**
SWITCHING MATRIX FOR A COMMUNICATION NETWORK
MATRICE DE COMMUTATION POUR UN RESEAU DE COMMUNICATION

(30) Priorität: 22.07.1998 DE 19833067
(43) Veröffentlichungstag der Anmeldung: 06.06.2001
(73) Patentinhaber: SIEMENS AKTIENGESELLSCHAFT, 80333 München (DE)
(72) Erfinder: HUBER, Siegfried, D-85084 Reichertshofen (DE)
(86) Internationale Anmeldenummer: DE9901970
(87) Internationale Veröffentlichungsnummer: WO00005838

(56) Entgegenhaltungen:
- GB-A- 2 296 159
- US-A- 5 214 640
- FISCHER W ET AL: "A SCALABLE ATM SWITCHING SYSTEM ARCHITECTURE" IEEE JOURNAL ON SELECTED AREAS IN COMMUNICATIONS,US,IEEE INC. NEW YORK, Bd. 9, Nr. 8, Seite 1299-1307 XP000267581 ISSN: 0733-8716

## Beschreibung

Die Erfindung betrifft ein Koppelfeld zur Kopplung von Eingangsleitungen und Ausgangsleitungen einer Vermittlungsstelle an einem Netzknoten eines Kommunikationsnetzes, insbesondere eines ATM (Asynchronous Transfer Mode)-Kommunikationsnetzes, mit primären Koppelelementen, um über die Eingangsleitungen an dem jeweiligen primären Koppelelement eingehende Eingangssignale auszuwählen und nur die ausgewählten Eingangssignale ausgangsseitig auszugeben.

Koppelfelder an Netzknoten eines Kommunikationsnetzes, insbesondere eines ATM-Kommunikationsnetzes, sind bekannt.

Die US-A-5 214640 offenbart beispielsweise ein Koppelnetz für höhere Datenraten mit separaten Baugruppen für die primären Koppelelemente und für die Ausgangsschnittstellen. Aus der JP-A-59 135994 ist ferner ein TDM-Koppelnetz und aus der JP-A-59 501034 eine Paketvermittlungseinheit zur Vermittlung von Paketen digitaler Signale, nämlich ein sogenannter "high-speed packet switching" bekannt.

Bei einem bekannten Koppelfeld werden beispielsweise 16 Eingangsleitungen mit 16 Ausgangsleitungen gekoppelt, so daß über jede der Eingangsleitungen an dem Koppelfeld eingehende Eingangssignale auf jede der Ausgangsleitungen lenkbar bzw. vermittelbar sind. Beispielsweise erkennen die Koppelelemente des Koppelfeldes die richtige Ausgangsleitung, auf die das Eingangssignal gegeben werden soll, anhand einer in bekannter Weise definierten Information im Zellenkopf einer ATM-Zelle, die das Eingangssignal oder einen Teil des Eingangssignals darstellt. Bekannt ist es insbesondere auch, Eingangssignale mehrerer Eingangsleitungen bzw. mehrerer eingangsseitig geschalteter Übertragungskanäle über ein gemeinsames Übertragungsmedium, beispielsweise ein Glasfaserkabel, optisch zu dem Koppelfeld zu übertragen. An einem entsprechenden Eingang des Koppelfeldes befindet sich dann ein optisch/elektrischer Wandler, der die optischen Signale in elektrische Signale umwandelt, welche innerhalb des Koppelfeldes verteilt bzw. vermittelt werden. Die elektrischen Signale werden dann entweder einzeln oder zu mehreren gemeinsam über die Eingangs leitungen zu den primären Koppelelementen geleitet.

Bekannt ist weiterhin ein derartiges Koppelfeld, bei dem ein optisch/elektrischer Wandler an einer Basisplatine angeordnet ist. Die Basisplatine trägt weiterhin eine Busstruktur, die den optisch/elektrischen Wandler mit den primären Koppelelementen verbindet. Im Fall des vorstehend erwähnten 16/16-Koppelfeldes, d.h. des Koppelfeldes mit 16 Eingängen und 16 Ausgängen, über die die Signale am Koppelfeld eingehen bzw. ausgehen können, verteilt die Busstruktur die Eingangssignale auf insgesamt acht 16/2-Koppelelemente, d.h. primäre Koppelelemente, die jeweils 16 Eingangsports und 2 Ausgangsports haben. Von den Ausgangsports der 16/2-Koppelelemente werden die von den Koppelelementen gegebenenfalls ausgewählten Eingangssignale als Ausgangssignale zu jeweils einem elektrisch/optischen Wandler geleitet, an dessen Ausgang sie auf ein Glasfaserkabel mit zwei Ausgangskanälen gegeben werden.

Die Busstruktur eines solchen Koppelfeldes, die von einer Basisplatine getragen wird, ist verhältnismäßig kostengünstig herstellbar und ist bis zu einer digitalen Gesamt-Datenrate von etwa 10 bis 15 Gbit/s belastbar, im konkreten Fall des 16/16-Koppelfeldes beispielsweise bis zu einer Gesamt-Datenrate von 16 x 800 Mbit/s = 12,8 Gbit/s belastbar.

Im Zuge zunehmender Komplexität von Kommunikationsnetzen wurden Koppelfelder vorgeschlagen, die eine wesentlich größere Gesamt-Datenrate als 15 Gbit/s handhaben können. Beispielsweise wurde ein 64/64-Koppelfeld vorgeschlagen mit vier eingangsseitigen Glasfaserkabeln, über die jeweils Eingangssignale von 16 Verbindungen bzw. Kanälen auf das Koppelfeld gebbar sind. Dementsprechend weist das Koppelfeld 32 Baugruppen mit jeweils vier primären 16/2 Koppelelementen auf, wobei jeweils eines der vier primären 16/2-Koppelelemente jeder Baugruppe einem der vier eingangsseitigen Glasfaserkabel zugeordnet ist und mit diesem verbunden ist. Die insgesamt acht Ausgangsports der vier primären 16/2-Koppelelemente jeweils einer Baugruppe sind mit Eingangsports eines sekundären Koppelelements der jeweiligen Baugruppe verbunden, dessen zwei Ausgangsports wiederum mit jeweils einem elektrisch/optischen Wandler zur Ausgabe der Ausgangssignale des Koppelfeldes verbunden ist.

Bei einem solchen Koppelfeld mit hoher Gesamt-Datenrate reicht eine einfache Busstruktur, die, wie vorstehend am Beispiel des 16/16-Koppelfeldes beschrieben, von einer einzigen Basisplatine getragen wird, nicht mehr aus, um alle Eingänge des Koppelfeldes mit den primären Koppelelementen zu verbinden. Es wurde daher vorgeschlagen, optische Teiler vorzusehen, die in Signallaufrichtung eingangsseitig vor den optisch/elektrischen Wandlern angeordnet sind. An den optischen Teilern werden die Eingangssignale jeweils eines Glasfaserkabels bzw. eines Glasfaserkabelbündels vervielfacht, wobei jeweils eines der vervielfachten Eingangssignale zu einem optisch/elektrischen Wandler geleitet wird, der am Eingang einer von mehreren Basisplatinen mit jeweils einer Busstruktur vorgesehen ist. Jede der Basisplatinen bzw. Busstrukturen weist eingangsseitig eine Anzahl der optisch/elektrischen Wandler auf, die gleich der Anzahl von eingangsseitigen Glasfaserkabeln bzw. der Anzahl von eingangsseitigen Glasfaserkabelbündeln des Koppelfeldes ist. Somit wird ein Teil der Aufgabe, die Eingangssignale auf die primären Koppelelemente zu verteilen, von optischen Teilern und ausgangsseitig an diesen angeschlossenen Glasfaserkabeln übernommen. Dies hat den Nachteil, daß bei der optischen Teilung die Lichtstärke pro Eingangssignal abnimmt; was zur Folge hat, daß mit einer verhältnismäßig hohen Signal-Lichtstärke auf den Übertragungswegen vor den optischen Teilern gearbeitet werden muß und/oder qualitativ hochstehende und damit teure optische Teiler verwendet werden müssen. Außerdem muß eine größere Anzahl der optisch/elektrischen Wandler vorhanden sein, als Eingangsleitungen vorhanden sind.

Weiterhin wurde vorgeschlagen, eine im Vergleich zu der von dem vorstehenden beschriebenen 16/16-Koppelfeld bekannten Busstruktur wesentlich komplexere Busstruktur zu verwenden, die alle Eingänge des Koppelfeldes mit den erforderlichen primären Koppelelementen verbindet. Diese komplexe Busstruktur wird jedoch von einer dementsprechend großen Basisplatine getragen und weist eine Mehrfach-Schichtstruktur auf, wobei in den Schichten jeweils Leiterbahnen von verschiedenen Teilen der Busstruktur angeordnet sind, die gegen Leiterbahnen der anderen Teile bzw. anderen Schichten isoliert sein müssen, da sich Leiterbahnen der unterschiedlichen Teile der Busstruktur überkreuzen. Weiterhin ist die modulare Verwendbarkeit einer solchen komplexen Busstruktur, insbesondere wegen verhältnismäßig hohem herstellungstechnischen Aufwand, begrenzt. So kann eine komplexe Busstruktur unter wirtschaftlichen Gesichtspunkten nicht sinnvoll für einfachere Koppelfeider mit geringeren Gesamt-Datenraten eingesetzt werden.

Aufgabe der vorliegenden Erfindung ist es, ein Koppelfeld der eingangs genannten Art anzugeben, das auch bei hohen Gesamt-Datenraten bzw. bei einer großen Anzahl von Signaleingängen und/oder Signalausgängen eine herstellungstechnisch einfache Verbindungsstruktur zwischen den Signaleingängen und den primären Koppelelementen aufweist.

Die Aufgabe wird durch ein Koppelfeld mit den Merkmalen des Anspruchs 1 gelöst. Weiterbildungen sind Gegenstand der abhängigen Ansprüche.

Das erfindungsgemäße Koppelfeld weist eine Mehrzahl von Busstrukturen auf, um jeweils eine Teilanzahl der Eingangsleitungen mit den primären Koppelelementen zu verbinden. Weiterhin sind Baugruppen mit jeweils einer Mehrzahl der primären Koppelelemente vorgesehen. Die primären Koppelelemente einer Baugruppe werden von einem gemeinsamen Trägerelement getragen und sind eingangsseitig durch dieselbe gemeinsam Busstruktur angeschlossen. Über die Baugruppen sind Ausgangsschnittstellen, jeweils zwischen primären Koppelelementen und einer Teilanzahl der Ausgangsleitungen, verteilt.

Zumindest eine der Ausgangsschnittstellen ist eingangsseitig mit primären Koppelelementen von wenigstens zwei der Baugruppen verbunden. Diese zwei Baugruppen sind an verschiedenen Eingangsleitungen angeschlossen.

Durch die Verwendung einer Mehrzahl von Busstrukturen kann die einzelne Busstruktur wesentlich einfacher aufgebaut sein als die bekannten komplexen Busstrukturen. Durch das Konzept der Verwendung einfacher Busstrukturen nimmt die Modularität beim Aufbau komplexer Koppelfelder erheblich zu. Auch kann beispielsweise ein Koppelfeld auf einfache Weise nachträglich erweitert werden, indem zusätzliche, neue Eingänge des Koppelfeldes über eine zusätzliche Busstruktur mit neu hinzuzufügenden Baugruppen verbunden werden und dementsprechende zusätzliche Querverbindungen zwischen den neuen Baugruppen und den bereits vorhandenen Baugruppen hergestellt werden, um mit den neuen Eingängen verbundene Eingangsleitungen mit bereits bestehenden Ausgangsleitungen des Koppelfeldes zu koppeln. Dies geschieht insbesondere durch Verbinden von Ausgangsports der primären Koppelelemente der neuen Baugruppen mit Ausgangsschnittstellen bereits vorhandener Baugruppen. Umgekehrt können entsprechend Ausgangsports von primären Koppelelementen bestehender Baugruppen mit einer oder mehreren Ausgangsschnittstellen der neu hinzugefügten Baugruppen verbunden werden. Im einfachsten Fall werden solche Verbindungen durch Einstecken bzw. Einlöten von Kabeln an den Ausgangsports bzw. den Ausgangsschnittstellen geschaffen.

Bei einer Weiterbildung haben die insgesamt zwischen verschiedenen Baugruppen ausgangsseitig an den primären Koppelelementen angeschlossenen Querverbindungen zu den Ausgangsschnittstellen anderer Baugruppen eine höhere maximale Gesamt-Datenrate als die einzelnen Busstrukturen. Dies hat den Vorteil, daß die einzelnen Busstrukturen, der niedrigeren Gesamt-Datenrate entsprechend, einfacher aufgebaut sein können. Weiterhin können etwaig weitere mit den einzelnen Busstrukturen verbundene Bauelemente des Koppelfeldes, beispielsweise optisch/elektrische Wandler, entsprechend einfach ausgelegt sein. Insbesondere kann auf optische Splitter zur Vervielfältigung von Eingangssignalen und auf zusätzliche optisch/elektrische Wandler verzichtet werden.

Bevorzugtermaßen ist die zumindest eine der Ausgangsschnittstellen, die eingangsseitig mit primären Koppelelementen von wenigstens zwei der Baugruppen verbunden ist, jeweils durch ein sekundäres Koppelelement zur Kopplung der Eingangsleitungen verschiedener Baugruppen gebildet. Es ist somit beispielsweise möglich, denselben Typ von Koppelelementen als primäre und als sekundäre Koppelelemente zu verwenden. Insbesondere hinsichtlich der geringen Stückkosten bei der Massenfertigung eines Typs von Koppelelementen ergeben sich daraus Vorteile.

Bei einer Weiterbildung werden die Busstrukturen jeweils von einer Basisplatine getragen. Die Basisplatinen sind beispielsweise jeweils paarweise nebeneinander in Reihe zueinander angeordnet. Auf diese Weise sind die ausgangsseitigen Anschlußstellen der Busstrukturen gut zugänglich für den Anschluß an die jeweiligen Baugruppen.

Zweckmäßigerweise sind die jeweils von einer Busstruktur angeschlossenen Baugruppen jeweils über Steckverbinder mit der sie anschließenden Busstruktur verbunden, wobei die Steckverbinder eine Halteverbindung zwischen der Basisplatine und dem Trägerelement der Baugruppe darstellen. Weiterhin können zusätzlich seitliche Führungen an den Trägerelementen der Baugruppen vorgesehen sein, die ein einfaches Einschieben und Herausziehen der Baugruppe beim Herstellen und Lösen der Steckverbindung erlauben.

Bei einer bestimmten Ausgestaltung des erfindungsgemäßen Koppelfeldes weist zumindest eine der Busstrukturen Verteilerknoten auf, an denen eingangsseitige Leitungsverbindungen aufgegabelt werden, beispielsweise zu einer Leitungsverbindung, die zu einem primären Koppelelement einer angeschlossenen Baugruppe führt und zu einer Leitungsverbindung, die zu einem weiteren Verteilerknoten führt. Bei einer Weiterbildung oder alternativen Ausgestaltung weist zumindest eine der Baugruppen oder jede der Baugruppen jeweils eine Verteilerstruktur auf, die eine eingangsseitig anschließende Leitung oder ein eingangsseitig anschließendes Leitungsbündel der sie anschließenden Busstruktur mit jedem primären Koppelelement der Baugruppe verbindet. Dadurch, daß die Aufgabelung innerhalb der Baugruppe erfolgt, vereinfacht sich die jeweilige anschließende Busstruktur zusätzlich. Weiterhin kann beispielsweise Material für Leiterbahnen eingespart werden, da die Aufgabelung erst in Signallaufrichtung dicht vor den Eingangsports der primären Koppelelemente erfolgt.

Bei einer Weiterbildung sind die Busstrukturen gleichartig strukturiert, so daß durch jede Busstruktur dieselbe Anzahl von Eingangsleitungen mit derselben Anzahl von primären Koppelelementen verbindbar oder verbunden ist.

Bei einer Weiterbildung ist jede Eingangsleitung des Koppelfeldes über genau eine der Busstrukturen mit den primären Koppelelementen der Baugruppen verbunden.

Bei einer bevorzugten Weiterbildung des erfindungsgemäßen Koppelfeldes sind die Baugruppen zu Trichterstrukturen vernetzt, wobei jede der Trichterstrukturen von jeder der Busstrukturen zumindest eine angeschlossene Baugruppe aufweist und wobei die Ausgangsschnittstellen derart verteilt und innerhalb einer Trichterstruktur mit den primären Koppelelementen verbunden sind, daß jede der Eingangsleitungen des Koppelfeldes mit jeder der Ausgangsleitungen der Trichterstruktur gekoppelt ist. Im allgemeinen haben die Trichterstrukturen ausgangsseitig Verbindungen zu einer Mehrzahl von Ausgangsleitungen des Koppelfeldes. Im speziellen Fall können eine oder mehrere der Trichterstrukturen jedoch auch nur mit einer Ausgangsleitung verbunden sein. Die Anzahl der Ausgangsleitungen einer Trichterstruktur hängt insbesondere davon ab, wieviele der Ausgangsleitungen zu einem Leitungsbündel zusammengefaßt werden sollen und beispielsweise über ein einziges Glasfaserkabel zu einem von der Vermittlungsstelle entfernten Ort des Kommunikationsnetzes führen. Die Vernetzung der Baugruppen jeweils zu Trichterstrukturen hat den Vorteil, daß die eigentliche Kopplung der Eingangsleitungen des Koppelfeldes mit den jeweiligen Ausgangsleitungen der Trichterstruktur in Signallaufrichtung vollständig hinter den primären Koppelelementen der Trichterstrukturen erfolgt. Insbesondere muß innerhalb der Busstrukturen keine Verteilung der Eingangssignale auf alle Baugruppen einer bestimmten Trichterstruktur vorgenommen werden. Weiterhin müssen nur die Baugruppen jeweils derselben Trichterstruktur untereinander vernetzt sein. Unter Vernetzung wird die Verbindung der Ausgangsports der primären Koppelelemente mit Ausgangsschnittstellen anderer Baugruppen verstanden. Eine Vernetzung von Baugruppen verschiedener Trichterstrukturen ist nicht erforderlich, da die nötige Vervielfachung und Verteilung der Eingangssignale auf die verschiedenen Trichterstrukturen von den jeweiligen Busstrukturen bzw. Verteilerstrukturen der Baugruppen übernommen wird.

Vorzugsweise weist jede der Baugruppen eine der eingangsseitig mit primären Koppelelementen von wenigstens zwei der Baugruppen verbundenen Ausgangsschnittstellen auf. Diese gleichmäßige Verteilung der Ausgangsschnittstellen über die Baugruppen führt zu einer übersichtlichen und leicht zugänglichen Anordnung der Ausgangsschnittstellen bzw. der an sie angeschlossenen Ausgangsleitungen. Weiterhin kann insbesondere derselbe Typ von Baugruppen für alle Baugruppen verwendet werden. Wie auch durch die Verwendung lauter gleichartiger Busstrukturen kann somit ein modulares, auf einfache Weise erweiterbares Koppelfeld aufgebaut werden.

Die Erfindung wird nun anhand von Ausführungsbeispielen näher erläutert. Dabei wird Bezug auf die beigefügte Zeichnung genommen. Die Erfindung ist jedoch nicht auf diese Ausführungsbeispiele beschränkt. Die einzige Figur der Zeichnung zeigt:
ein 64/64-Koppelfeld mit vier Busstrukturen und acht Trichterstrukturen in schematischer Teildarstellung.

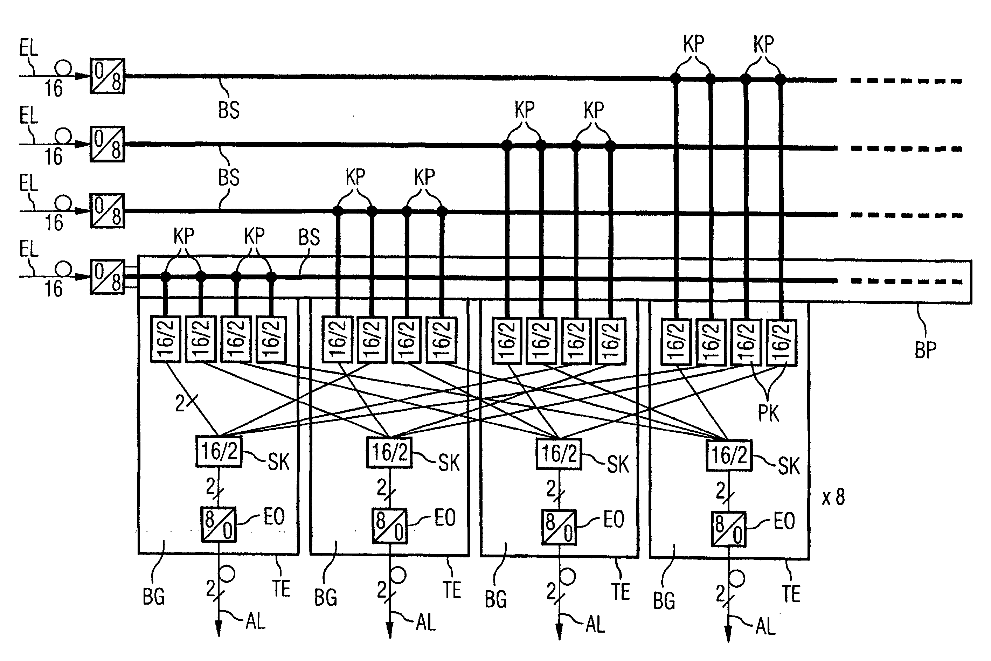

Wie aus Fig. 1 erkennbar ist, sind an dem dargestellten Koppelfeld vier Bündel mit jeweils 16 Eingangsleitungen EL eingangsseitig angeschlossen. Die Anzahl der Eingangsleitungen EL pro Bündel ist durch die Zahl 16 in Fig. 1 dargestellt. Die Eingangsleitungen sind jeweils als ein Glasfaserkabel realisiert, das an einem optisch/elektrischen Wandler OE endet. Entsprechend der Anzahl 64 von Eingangsleitungen sind 64 optisch/elektrische Wandler OE vorgesehen, von denen die optischen Eingangssignale in elektrische Eingangssignale umgewandelt werden und auf jeweils eine der vier Busstrukturen BS gegeben werden, die auf jeweils einer separaten Basisplatine BP angeordnet sind. Die Basisplatinen BP, von denen in Fig. 1 nur eine dargestellt ist, tragen außer der jeweiligen Busstruktur BS auch die jeweils 16 eingangsseitig an der Busstruktur BS angeschlossenen optisch/ elektrischen Wandler. Die Busstrukturen BS weisen jeweils Knotenpunkte KP auf, an denen eine Aufgabelung der Leitungsverbindungen zwischen den optisch/elektrischen Wandlern OE und den jeweils von der Busstruktur angeschlossenen primären Koppelelementen PK stattfindet. Von den Knotenpunkten KP der Busstrukturen BS sind in Fig. 1 jeweils nur vier Stück pro Busstruktur BS dargestellt. Die Busstrukturen BS setzen sich jedoch auf der rechten Seite der Fig. 1 fort, wie durch die vier unterbrochenen Linien dargestellt ist. Dort befinden sich weitere Knotenpunkte KP jeder Busstruktur BS. Ebenso befinden sich dort Leitungsverbindungen von den Knotenpunkten KP zu primären Koppelelementen PK, und zwar jeweils zu 7 x 4 Stück der primären Koppelelemente PK pro Busstruktur, wobei, wie aus der Darstellung von Fig. 1 ersichtlich ist, jeweils vier der primären Koppelelemente PK von einem gemeinsamen Trägerelement TE getragen werden. Insgesamt sind also 32 solcher Trägerelemente TE mit jeweils vier primären Koppelelementen PK vorhanden, wie auch aus der Darstellung der vier gezeigten Trägerelemente TE und der Bezeichnung "x 8" im unteren rechten Figurenteil der Fig. 1 ersichtlich ist.

Wie aus der Darstellung nicht erkennbar ist, sind die Basisplatinen BP mit den Busstrukturen BS in Reihe übereinander angeordnet, wobei die flächenhaften Basisplatinen wie Teilstücke einer Rückwand eines Regals bzw. eines Gestells zur Aufnahme elektrischer Schaltungen angeordnet sind. Das Gestell ist insbesondere ein sogenanntes 19"-Rack, wie es im Handel erhältlich ist. Auf der Vorderseite der Basisplatinen BP befinden sich jeweils nebeneinander acht Steckplätze pro Basisplatine, die von den jeweiligen durch die Busstruktur angeschlossenen Baugruppen BG besetzt sind. Zur Erweiterung des 64/64-Koppelfeldes können weitere Steckplätze vorgesehen sein. An den Steckplätzen sind die vorhandenen Baugruppen BG über Steckverbinder mit der zugehörigen Busstruktur BS verbunden, wobei die Steckverbinder jeweils eine Halteverbindung zwischen der Basisplatine BP und dem Trägerelement TE darstellen. Die Trägerelemente TE sind aus Platinenmaterial hergestellt und so angeordnet, daß die schmalen Stirnflächen der Trägerelemente TE sich in vertikaler Richtung erstrecken. Unter Stirnflächen werden dabei die Endflächen der Trägerelemente TE verstanden, die eine Breite haben, die der Platinendicke entspricht und die eine Länge haben, die der kürzeren Außenkante der Rechtecke entspricht, als die die Trägerelemente TE in Fig. 1 dargestellt sind. Die längeren Rechteckkanten bzw. langen Schmalflächen der Trägerelemente TE erstrecken sich in horizontaler Richtung von der jeweiligen Basisplatine BP zu der Vorderseite des 19"-Racks. Sie sind dabei jeweils von einem Führungsprofil umgriffen, das das Einstecken bzw. Entnehmen des jeweiligen Trägerelements an seinen Steckplatz bzw. von seinem Steckplatz erleichtert. Von den insgesamt 8 Baugruppen BG pro Busstruktur BS ist in Fig. 1 nur jeweils eine dargestellt.

Jede der Baugruppen BG weist außer den vier primären Koppelelementen PK ein sekundäres Koppelelement SK und zwei ausgangsseitig mit dem sekundären Koppelelement SK verbundene elektrisch/optische Wandler EO auf. An den elektrisch/optischen Wandlern EO werden die Ausgangssignale der jeweiligen Baugruppen BG in optische Signale umgewandelt und auf die Ausgangsleitungen AL gegeben. Jede Baugruppe BG hat zwei Ausgangsleitungen AL, wie durch die Zahl 2 in Signallaufrichtung sowohl vor als auch nach den elektrisch/optischen Wandlern EO dargestellt ist. Das sekundäre Koppelelement SK fungiert jeweils als Schnittstelle zwischen primären Koppelelementen PK und den Ausgangsleitungen AL bzw. den elektrisch/optischen Wandlern EO. Wie auch die primären Koppelelemente PK sind auch die sekundären Koppelelemente SK 16/2-Koppelelemente, d.h. sie haben jeweils 16 Eingangsports und 2 Ausgangsports. Von den 16 Eingangsports der primären Koppelelemente PK sind jeweils alle belegt, d.h. mit jeweils einer der Eingangsleitungen verbunden, die an der entsprechenden Busstruktur BS angeschlossen sind. Die in Fig. 1 dargestellten Leitungsverbindungen der Busstrukturen BS sind daher als Leitungsverbindungsbündel mit mindestens 16 einzelnen Leitungen bzw. Leiterbahnen zu verstehen. Über jede der einzelnen Leitungen bzw. Leiterbahnen sind digitale Daten z.B. mit einer Datenrate von 800 Mbit/s übertragbar.

Die vier in Fig. 1 dargestellten Baugruppen BG sind zu einer Trichterstruktur vernetzt, indem jeweils die Ausgangsports von drei der vier primären Koppelelemente PK einer Baugruppe BG mit Eingangsports der sekundären Koppelelemente 5K der drei anderen Baugruppen BG der Trichterstruktur verbunden sind. Dabei sind jeweils die zwei Ausgangsports eines primären Koppelelements PK mit zwei der Eingangsports desselben sekundären Koppelelements SK verbunden. Folglich bestehen zwischen den primären Koppelelementen PK jeder Baugruppe BG der Trichterstruktur Verbindungen zu jedem sekundären Koppelelement SK der Trichterstruktur. Die eigentliche Kopplung der Eingangsleitungen EL verschiedener Eingangsleitungsbündel erfolgt somit in Signallaufrichtung erst hinter den primären Koppelelementen PK durch Punkt-zu-Punkt-Verbindungen zwischen den einzelnen Baugruppen BG der Trichterstrukturen. Im Ausführungsbeispiel ist dabei gesichert, daß unabhängig davon, auf welcher der Eingangsleitungen EL ein Signal an dem Koppelfeld ankommt, das Eingangssignal auf jede der Ausgangsleitungen AL der Trichterstruktur geführt werden kann, wobei die Koppelelemente PK, SK an der Information im Kopf einer ATM-Zelle, die ein Eingangssignal darstellt bzw. einen Teil eines Eingangssignals darstellt, erkennen, ob die ATM-Zelle ausgangsseitig an dem jeweiligen Koppelelement PK, SK ausgegeben werden darf.

Aus Kostengründen werden in dem in Fig. 1 darstellten Ausführungsbeispiel als sekundäre Koppelelemente SK 16/2-Koppelelemente verwendet, obwohl nur jeweils acht Eingangsports der sekundären Koppelelemente SK belegt sind. Bei einer alternativen Ausgestaltung werden jedoch 8/2-Koppelelemente verwendet.

## Patentansprüche

1. Koppelfeld zur Kopplung von Eingangsleitungen (EL) und Ausgangsleitungen (AL) einer Vermittlungsstelle an einem Netzknoten eines Kommunikationsnetzes, insbesondere eines Asynchronous Transfer Mode-Kommunikationsnetzes mit primären Koppelelementen (PK), um über die Eingangsleitungen (EL) an dem jeweiligen primären Koppelelement (PK) eingehende Eingangssignale auszuwählen und nur die ausgewählten Eingangssignale ausgangsseitig auszugeben, wobei das Koppelfeld umfaßt:
- eine Mehrzahl von Busstrukturen (BS), um jeweils eine Teilanzahl der Eingangsleitungen (EL) mit den primären Koppelelementen (PK) zu verbinden, und
- Baugruppen (BG) mit jeweils einer Mehrzahl der primären Koppelelemente (PK), die von einem gemeinsamen Trägerelement (TE) getragen werden und die eingangsseitig durch dieselbe gemeinsame Busstruktur (BS) angeschlossen sind,
wobei Zumindest eine Ausgangsschnittstelle (SK) eingangsseitig mit primären Koppelelementen (PK) von wenigstens zwei der Baugruppen (BG) verbunden ist, die an verschiedenen Eingangsleitungen (EL) angeschlossen sind,
**dadurch gekennzeichnet, daß**
über die Baugruppen (BG) die Ausgangsschnittstellen (SK), jeweils zwischen primären Koppelelementen (PK) und einer Teilanzahl der Ausgangsleitungen (AL), verteilt sind und daß jede der Baugruppen (BG) eine der eingangsseitig mit primären Koppelelementen (PK) von wenigstens zwei der Baugruppen (HG) verbundenen Ausgangsschnittstellen (SK) aufweist.

2. Koppelfeld nach Anspruch 1,
**dadurch gekennzeichnet,**
**daß** die zumindest eine der Ausgangsschnittstellen (SK) jeweils durch ein sekundäres Koppelelement zur Kopplung der Eingangsleitungen (EL) verschiedener Baugruppen (BG) gebildet ist.

3. Koppelfeld nach Anspruch 1 oder 2,
**dadurch gekennzeichnet,**
**daß** die Busstrukturen (BS) jeweils von einer Basisplatine (BP) getragen werden.

4. Koppelfeld nach Anspruch 3,
**dadurch gekennzeichnet,**
**daß** die jeweils von einer Busstruktur (BS) angeschlossenen Baugruppen (BG) jeweils über Steckverbinder mit der sie anschließenden Busstruktur (BS) verbunden sind, die eine Halteverbindung zwischen der Basisplatine (BP) und dem Trägerelement (TE) darstellen.

5. Koppelfeld nach einem der Ansprüche 1 bis 4,
**dadurch gekennzeichnet,**
**daß** die Baugruppen (BG) jeweils eine Verteilerstruktur aufweisen, die eine eingangsseitig anschließende Leitung oder ein eingangsseitig anschließendes Leitungsbündel der sie anschließenden Busstruktur (BS) mit jedem primären Koppelelement (PK) der Baugruppe (BG) verbindet.

6. Koppelfeld nach einem der Ansprüche 1 bis 5,
**dadurch gekennzeichnet,**
**daß** die Busstrukturen (BS) gleichartig strukturiert sind, so daß durch jede Busstruktur (BS) dieselbe Anzahl von Eingangsleitungen (EL) mit derselben Anzahl von primären Koppelelementen (PK) verbindbar oder verbunden ist.

7. Koppelfeld nach einem der Ansprüche 1 bis 6,
**dadurch gekennzeichnet,**
**daß** jede Eingangsleitung (EL) des Koppelfeldes über genau eine der Busstrukturen (BS) mit den primären Koppelelementen (PK) der Baugruppen (BG) verbunden ist.

8. Koppelfeld nach einem der Ansprüche 1 bis 7,
**dadurch gekennzeichnet,**
**daß** die Baugruppen (BG) zu Trichterstrukturen vernetzt sind, wobei jede der Trichterstrukturen von jeder der Busstrukturen (ES) zumindest eine angeschlossene Baugruppe (BG) aufweist und wobei die Ausgangsschnittstellen (SK) derart verteilt und innerhalb jeweils einer Trichterstruktur mit den primären Koppelelementen (PKy verbunden sind, daß jede der Eingangsleitungen (EL) des Koppelfeldes mit jeder der Ausgangsleitungen (AL) der Trichterstruktur gekoppelt ist.

## Claims

1. Switching matrix for coupling input lines (EL) and output lines (AL) of a switching centre to a network node in a communications network, in particular an asynchronous transfer mode communications network with primary switching elements (PK) in order to select input signals which arrive via the input lines (EL) at the respective primary switching element (PK) and to output only the selected input signals on the output side, with the switching matrix comprising:
- a number of bus structures (BS) in order to connect in each case one subset of the input lines (EL) to the primary switching elements (PK), and
- assemblies (BG) each having a number of the primary switching elements (PK), which are supported by a common supporting element (TE) and are connected on the input side by the same common bus structure (BS)
with at least one output interface (SK) being connected on the input side to primary switching elements (PK) of at least two of the assemblies (BG) which are connected to different input lines (EL),
**characterized in that**
the output interfaces (SK) are distributed via the assemblies (BG), in each case between primary switching elements (PK) and a subset of the output lines (AL), and **in that** each of the assemblies (BG) has one of the output interfaces (SK) which are connected on the input side to primary switching elements (PK) of at least two of the assemblies (BG).

2. Switching matrix according to Claim 1,
**characterized in that**
the at least one of the output interfaces (SK) is in each case formed by a secondary switching element for coupling the input lines (EL) of different assemblies (BG).

3. Switching matrix according to Claim 1 or 2,
**characterized in that**
the bus structures (BS) are each mounted on a base board (BP).

4. Switching matrix according to Claim 3,
**characterized in that**
the respective assemblies (BG) which are connected by a bus structure (BS) are each connected via plug connectors to the bus structure (BS) which connects them, which represents a retaining connection between the base board (BP) and the supporting element (TE).

5. Switching matrix according to one of Claims 1 to 4,
**characterized in that**
the assemblies (BG) each have a distribution structure which connects a line which is connected on the input side or a cable harness, which is connected on the input side, of the bus structure (BS) which connects them, to each primary switching element (PK) in the assembly (BG).

6. Switching matrix according to one of Claims 1 to 5,
**characterized in that**
the bus structures (BS) have identical structures, so that the same number of input lines (EL) can be connected or are connected by each bus structure (BS) to the same number of primary switching elements (BK).

7. Switching matrix according to one of Claims 1 to 6,
**characterized in that**
each input line (EL) of the switching matrix is connected via one, and only one, of the bus structures (BS) to the primary switching elements (PK) of the assemblies (BG).

8. Switching matrix according to one of Claims 1 to 7,
**characterized in that**
the assemblies (BG) are networked to form funnel structures, with each of the funnel structures of each of the bus structures (BS) having at least one connected assembly (BG), and with the output interfaces (SK) being distributed, and being connected within each funnel structure to the primary switching elements (PK) in such a manner that each of the input lines (EL) of the switching matrix is coupled to each of the output lines (AL) of the funnel structure.

## Revendications

1. Réseau de connexion pour la connexion de lignes d'entrée (EL) et de lignes de sortie (AL) d'un centre de commutation à un noeud d'un réseau de communication, notamment d'un réseau de communication du type Asynchronous Transfer Mode, ayant des éléments de connexion primaires (PK) pour sélectionner des signaux d'entrée arrivant par l'intermédiaire des lignes d'entrée (EL) à l'élément de connexion primaire (PK) respectif et pour ne délivrer en sortie que les signaux d'entrée sélectionnés, le réseau de connexion comprenant
- une multiplicité de structures de bus (BS) pour relier à chaque fois un nombre partiel des lignes d'entrée (EL) aux éléments de connexion primaires (PK), et
- des modules (BG) avec à chaque fois une multiplicité des éléments de connexion primaires (PK) qui sont portés par un élément porteur commun (TE) et qui sont raccordés en sortie par la même structure de bus commune (BS),
au moins une interface de sortie (SK) étant reliée côté entrée à des éléments de connexion primaires (PK) d'au moins deux des modules (BG) qui sont raccordés à différentes lignes d'entrée (EL),
**caractérisé par le fait que** les interfaces de sortie (SK), à chaque fois entre des éléments de connexion primaires (PK) et un nombre partiel des lignes de sortie (AL), sont distribuées sur les modules (BG) et que chacun des modules (BG) comporte l'une des interfaces de sortie (SK) reliées côté entrée à des éléments de connexion primaires (PK) d'au moins deux des modules (BG).

2. Réseau de connexion selon la revendication 1, **caractérisé par le fait que** l'une des interfaces de sortie (SK) - il y en a au moins une - est formée à chaque fois par un élément de connexion secondaire pour la connexion des lignes d'entrée (EL) de différents modules (BG).

3. Réseau de connexion selon la revendication 1 ou 2, **caractérisé par le fait que** les structures de bus (BS) sont portées à chaque fois par une carte de base (BP).

4. Réseau de connexion selon la revendication 3, **caractérisé par le fait que** les modules (BG) raccordés à chaque fois par une structure de bus (BS) sont reliés à chaque fois par l'intermédiaire de connecteurs multibroches à la structure de bus (BS) les raccordant, lesquels connecteurs multibroches représentent une liaison de fixation entre la carte de base (BP) et l'élément porteur (TE).

5. Réseau de connexion selon l'une des revendications 1 à 4, **caractérisé par le fait que** les modules (BG) comportent à chaque fois une structure de distribution qui relie une ligne ou un faisceau de lignes raccordant côté entrée de la structure de bus (BS) les raccordant à chaque élément de connexion primaire (PK) du module (BG).

6. Réseau de connexion selon l'une des revendications 1 à 5, **caractérisé par le fait que** les structures de bus (BS) ont le même type de structure de telle sorte que le même nombre de lignes d'entrée (EL) peut être relié ou est relié au même nombre d'éléments de connexion primaires (PK) par chaque structure de bus (BS).

7. Réseau de connexion selon l'une des revendications 1 à 6, **caractérisé par le fait que** chaque ligne d'entrée (EL) du réseau de connexion est reliée par l'intermédiaire d'exactement une des structures de bus (BS) aux éléments de connexion primaires (PK) des modules (BG).

8. Réseau de connexion selon l'une des revendications 1 à 7, **caractérisé par le fait que** les modules (BG) sont mis en réseau selon des structures en entonnoir, chacune des structures en entonnoir de chacune des structures de bus (BS) comportant au moins un module raccordé (BG) et les interfaces de sortie (SK) étant distribuées et reliées de telle sorte à l'intérieur d'à chaque fois une structure en entonnoir aux éléments de connexion primaires (PK) que chacune des lignes d'entrée (EL) du réseau de connexion est connectée à chacune des lignes de sortie (AL) de la structure en entonnoir.
